# FASCICULE DE BREVET EUROPEEN

(11) **EP 3 575 069 B1**
(45) Date de publication et mention de la délivrance du brevet: **13.10.2021**
(21) Numéro de dépôt: 19176522.1
(22) Date de dépôt: 24.05.2019
(51) Int. Cl.: B29C 70/08, B29C 70/34, B29C 70/88, B29D 24/00, B32B 3/12, B32B 5/02, B32B 3/08

(54) **PROCEDE DE FABRICATION D'UN PANNEAU SANDWICH OPTIMISE**
HERSTELLUNGSVERFAHREN EINES OPTIMIERTEN SANDWICHPANEELS
METHOD FOR MANUFACTURING AN OPTIMISED SANDWICH PANEL

(30) Priorité: 25.05.2018 FR 1854283
(43) Date de publication de la demande: 04.12.2019
(73) Titulaire: Cath'Air, 33160 Saint-Medard-en-Jalles (FR)
(72) Inventeur: CATHERINEAU, Marie, 33000 BORDEAUX (FR); CATHERINEAU, Alain, 33290 LE PIAN MEDOC (FR)
(74) Mandataire: IP Trust

(56) Documents cités:
- WO-A1-2016/092438
- DE-A1-102009 052 263
- FR-A1- 2 779 379

## Description

### Domaine de l'invention

La présente invention concerne le domaine de la fabrication de panneaux composites comportant un cœur formé par un matériau alvéolaire présentant des cellules vides sur lesquelles sont apposées des fibres pré-imprégnés de résine.

De tels panneaux présentant une structure sandwich sont habituellement fabriqués par drapage selon des techniques couramment utilisées pour la fabrication des pièces en matériaux composites. Ces techniques de fabrication consistent à draper des fibres imprégnées de résine sur les deux faces d'une âme d'un matériau alvéolé tel qu'une mousse ou une structure en nid d'abeilles. Lorsque le drapage est terminé, l'ensemble est placé dans une presse à compression ou étuve ou autoclave afin de polymériser la résine suivant un cycle de température et de pression définis.

De telles structures sandwich de panneau composite sont utilisées en particulier dans le domaine aéronautique ou dans le nautisme. Une application particulière de l'invention concerne la réalisation de panneaux d'habillage, de cloisonnement et de cuisines (« Galley » en anglais ») dans les aéronefs. De façon plus générale, l'invention peut toutefois être utilisée pour réaliser tout panneau devant présenter une bonne tenue mécanique et un très bon aspect de surface pour une masse allégée.

Ces cloisons sont habituellement constituées d'un cœur en nid d'abeille ou en mousse renforcé de part et d'autre par des tissus ou nappes de verre, carbone ou hybride pré-imprégnés. Le nombre de tissus est dépendant du chargement appliqué à la structure. Plus celle-ci est sollicitée, plus les épaisseurs du coeur et des matériaux pré-imprégnés sont importantes.

### Etat de la technique

On connaît dans l'état de la technique le brevet FR2779379 concernant un procédé pour réaliser un panneau de structure composite renforcée du type sandwich à âme alvéolaire. Selon ce procédé :
- on réalise un empilement formé par
   - au moins une première peau en matériau thermoplastique renforcé,
   - un premier pli de renfort en matériau thermoplastique renforcé,
   - une âme alvéolaire en matériau thermoplastique,
   - un second pli de renfort en matériau thermoplastique renforcé, et
   - une seconde peau en matériau thermoplastique renforcé,
- les premier et second plis de renfort présentant une surface inférieure à celle des première et seconde peaux et étant positionnés de manière symétrique par rapport au plan formé par l'âme alvéolaire, à des endroits déterminés contre lesdites peaux,
   - on pré-assemble l'empilement,
   - on chauffe l'empilement pré-assemblé dans un four, et
   - on forme ledit panneau par pressage dudit empilement chauffé dans un moule à froid, sous une pression comprise entre 1 et 3.10⁶ Pa.

Ce document de l'art antérieur décrit une solution consistant à empiler une première peau en un matériau thermoplastique renforcé (et non pas un matériau pré-imprégné), puis un premier pli d'un matériau de renfort, puis une âme alvéolaire d'un matériau composite, puis un second pli de renfort en un matériau thermoplastique, puis une seconde peau en matériau thermoplastique renforcé.

Ce document évoque aussi en page 2 une solution jugée peu appropriée, que l'homme du métier lisant ce document serait donc enclin à écarter. Cette solution présentée comme inappropriée consiste à déposer une multitude de couches de pré-imprégné puis à porter l'assemblage dans un moule pour la polymérisation par chauffage. Cette solution conduit à un poids très élevé. Elle évoque aussi la possible de déposer des plis de renfort sur les zones de concentration des efforts.

Le document de l'art antérieur propose une démarche traditionnelle pour dimensionner des panneaux.

Celle-ci consiste à identifier par essais ou par simulation numérique les zones de concentration de contraintes et ajouter dans ces zones des plis de renforts. Cette technique ne permet pas des gains de masse et au contraire conduit à des panneaux plus lourds. En effet, la technique consiste à rajouter des tissus dans les zones de sur-contraintes et n'optimise pas les zones non chargées. Ainsi les zones qui ne sont pas chargées ne sont pas optimisées (suppression de plis).

Par ailleurs, ce document décrit un procédé de fabrication de formage dans un moule à froid d'un panneau préassemblé et préchauffé, d'un panneau de structure composite constitué de matériaux thermoplastiques (âme Nid d'abeille, peaux et plis).

On connaît aussi le brevet allemand DE102009052263A1 décrivant un matériau composite fibreux comportant une matrice et des fibres qui sont noyées dans la matrice sous la forme d'au moins un tissu textile constitué de formations de lignes textiles. L'objet de ce brevet est de fournir un moyen d'améliorer les propriétés d'amortissement mécanique des matériaux composites à fibres et des composants fabriqués à partir de ceux-ci, en particulier une production simple de composants étendus à plat devrait être rendue possible sans augmenter de manière néfaste leurs besoins en espace. Cette solution de l'art antérieur concerne plus particulièrement un élément en feuille constitué au moins partiellement d'un matériau composite à fibres ayant une matrice et ayant des fibres noyées dans la matrice sous la forme d'au moins un tissu textile constitué de structures linéaires textiles, une partie des structures linéaires étant comparée à le reste des lignes a une capacité d'amortissement mécanique accrue, caractérisée en ce que les structures de ligne ne sont dotées de la capacité d'amortissement mécanique accrue que dans certaines zones de surface des composants ou dans ces surfaces de composant une proportion beaucoup plus élevée que dans d'autres surfaces de composant.

Ce document propose une solution à l'optimisation de la capacité d'amortissement, sans grand rapport avec la présente invention.

La demande de brevet WO2016092438A1 concerne un composant composite pour un véhicule qui comprend un stratifié fabriqué à partir d'un matériau composite, une première surface de coussinet appliquée au stratifié, la première surface de coussinet comprenant une pluralité de premières étoupes étendues à proximité les unes des autres selon une configuration côte à côte et la première surface de coussinet définissant une première orientation de fibre, et une seconde surface de coussinet, la seconde surface de coussinet comprenant une pluralité de secondes étoupes étendues à proximité les unes des autres selon une configuration côte à côte et la seconde surface de coussinet définissant une seconde orientation de fibre qui diffère d'un angle prédéfini de la première orientation de fibre. La première surface de coussinet et la seconde surface de coussinet entrent en intersection au niveau d'une surface d'intersection et forment conjointement un premier pli de coussinet sur le stratifié.

Cette solution conduit à une superposition de renforts non optimisés et donc à une augmentation préjudiciable du poids.

### Inconvénients de l'art antérieur

Les panneaux sont destinés à des cloisons ou des pièces de structure intérieures d'un aéronef par exemple et doivent donc présenter des qualités mécaniques adaptées à la résistance à des contraintes nominales, déterminées pour les situations de dépressions, chute d'un corps sur la cloison, accélérations extrêmes, etc tout en respectant un objectif de masse défini. Pour garantir une résistance suffisante, on augmente dans l'art antérieur les épaisseurs de tissus ou nappes pré-imprégnés de résine.

La masse des matériaux imprégnés de résine contribue de façon prépondérante à la masse totale de la structure. Elle représente environ 60% de la masse totale pour un panneau constitué d'un Nid d'abeille de 25mm (1200g/m²) et de 2 couches de matériaux imprégnés de résine de part et d'autre du cœur en nid d'abeille (500g/m²/couche de matériaux imprégnés). Cette proportion passe à 70% si on rajoute une couche de matériaux imprégnés de part et d'autre du cœur en nid d'abeille.

Les solutions de l'art antérieur ne sont donc pas adaptées à la réalisation de panneaux alliant une résistance mécanique et une légèreté.

Enfin, certaines des solutions de l'art antérieur nécessitent le recours à des techniques de fabrication spécifiques, peu adaptées à une industrialisation de panneau à des prix acceptables, avec des équipements standards ou aboutissent à une structure avec des zones sans matière ne s'adapte pas à des cloisons qui sont revêtues par des éléments décoratifs tels que des placages ou stratifiés, cuir nécessitant des surfaces d'appui pour le collage.

### Solution apportée par l'invention

La présente invention vise à remédier aux inconvénients de l'art antérieur par un agencement permettant d'optimiser les matériaux pour diminuer la masse des éléments sandwich tout en respectant les spécifications relatives à la résistance mécanique. L'invention permet ainsi d'obtenir des gains de masse de l'ordre de 30% tout en conservant les critères de résistance mécanique exigés. L'invention consiste en un procédé selon la revendication 1.

L'étape initiale est réalisée avant la fabrication d'un échantillon de panneau sandwich. Elle permet de déterminer la géométrie des trajets d'efforts pour l'étape de fabrication, où les matériaux additionnels sont ajoutés et positionnés de part et d'autre du panneau, sur les trajets d'efforts calculés lors de l'étape initiale.

Selon des variantes de réalisation :
- ladite combinaison de sollicitations nominales correspond à la combinaison des cas limites de sollicitations
- ledit matériau est un matériau pré imprégné
- ledit matériau additionnel est un tissu pré imprégné
- ledit matériau pré imprégné additionnel est une nappe dont les fibres sont orientées selon les trajets d'effort
- ledit matériau additionnel est une tôle fine
- ledit matériau additionnel comprend des fibres de carbone, de verre, d'hybride carbone-verre ou d'aramide
- le dépôt de matériaux additionnels relie des lignes d'effort
- le procédé comporte une étape intermédiaire de dimensionnement par modélisation numérique d'un panneau composite comportant des zones de renfort calculées lors de ladite étape initiale, soumis à une combinaison de sollicitations nominales
- ladite étape intermédiaire déterminant la largeur des matériaux additionnels ainsi que le nombre de couches de matériau additionnel juste nécessaire.

### Description détaillée d'un exemple non limitatif de l'invention

D'autres caractéristiques et avantages ressortiront de la description qui va suivre d'un mode de réalisation du procédé selon l'invention, description donnée à titre d'exemple uniquement et en regard du dessin annexé sur lequel :
- la figure 1 une vue de la représentation topologique résultant de l'étape d'optimisation topologique

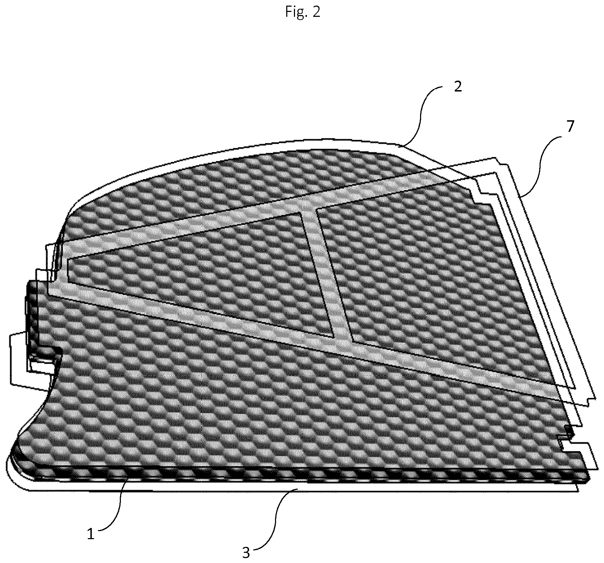

- la figure 2 représente une coupe schématique d'un panneau composite conforme à l'invention.

Le panneau du type nid d'abeilles, par exemple en aluminium ou dans le matériau connu sous la marque déposée NOMEX est constitué par un cœur alvéolaire (1) d'une épaisseur typiquement comprise entre quelques millimètres à quelques dizaines de millimètres.

Ces panneaux sont destinés à être fixés sur les structures de l'avion tels que les cadres, les rails de plancher, qui permettent de fixer le mobilier au moyen de pièces métalliques appelées ferrures ou fixations.

Chaque face du cœur alvéolaire (1) est revêtue d'une ou plusieurs couches de matériaux (2, 3) pré-imprégnés d'une résine appropriée. Il s'agit par exemple de fibres de verre ou du matériau connu sous la marque HEXCEL ou autres fabricants imprégnés d'une résine phénolique ou époxy ou autre.

Le panneau présente des zones de fixation, par exemple des ferrures destinées à la liaison entre le panneau et la structure de l'aéronef.

On applique au modèle numérique du panneau homogène (plein) avec ses zones de fixation différentes charges et forces supportées par la pièce correspondant à une combinaison de sollicitations nominales, par exemple une pression contre la paroi, une accélération de l'aéronef, etc.

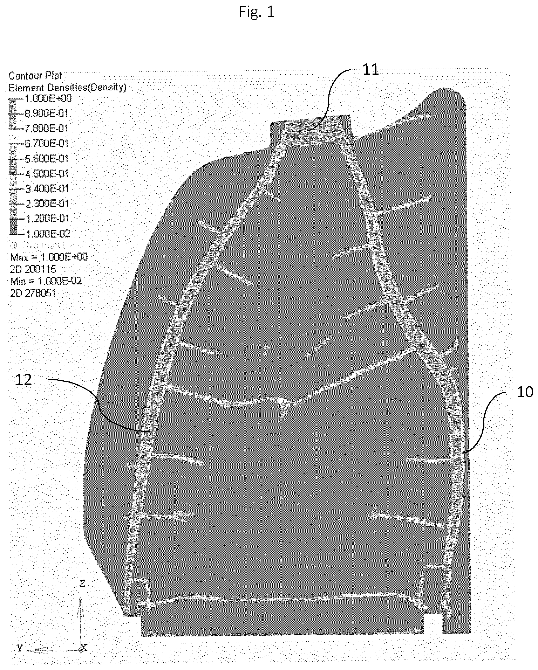

Cette modélisation permet d'appliquer ensuite une méthode d'optimisation topologique pour déterminer les trajets d'efforts principaux à l'aide d'un logiciel d'optimisation. Parmi les plus connus, on retrouve ainsi les logiciels Optistruct d'Altair Hyperworks, DesignSpace de l'éditeur Ansys, Tosca de Dassault Systèmes, Within Labs d'Autodesk ou encore Inspire de SolidThinking. La figure 1 est un exemple de représentation graphique du traitement d'optimisation topologique. Il fait apparaitre les trajets d'efforts (10, 11, 12) représentant les zones de sollicitations maximales.

Le résultat de l'optimisation topologique est utilisé pour positionner les tissus/nappes pré imprégnés ou renforts suivant les trajets d'efforts(10, 11, 12) obtenus par simulation numérique. L'invention consiste à dimensionner une structure sandwich avec la matière « juste nécessaire » au niveau des tissus tout en conservant une âme en Nid d'abeille. Les plis sont supprimés dans les zones faiblement chargées et sont rajoutés dans les zones chargées tout en conservant la base d'au moins un pli complet sur toute la surface de part et d'autre du coeur. Une boucle de calcul supplémentaire avec un logiciel de calcul par éléments finis permet de dimensionner la structure finale avec la conception préalablement réalisée.

On découpe ensuite des pièces additionnelles (7) dont la configuration correspond à la représentation des parties soumises à un effort, dans un matériau pré imprégné ou de renforcement, et on dépose sur chacune desdites couches de matériau pré imprégné, un matériau additionnel positionné sur les trajets d'efforts principaux déterminés lors de l'étape précédente, de manière symétrique par rapport au plan médian dudit panneau.

La fabrication du panneau est réalisée selon un processus conventionnel, dans une presse à compression suivant un cycle de température et pression définis.

Les faces externes du panneau ainsi réalisées peuvent être revêtues d'un placage de bois mince, d'épaisseur variable, par exemple de quelques dixièmes de millimètre. N'importe quelle essence de bois ou autre élément de décoration type Tedlar, cuir peut être utilisée.

L'utilisation pour les matériaux pré-imprégnés d'une résine phénolique permet au panneau composite selon l'invention de satisfaire les normes de feu, de toxicité et fumées dans le domaine aéronautique

Par ailleurs, l'invention n'est évidemment pas limitée au mode de réalisation représenté et décrit ci-dessus mais en couvre au contraire toutes les variantes, notamment en ce qui concerne les natures, formes et dimensions des éléments constitutifs du panneau composite et les conditions opératoires de leur assemblage.

Elle peut être appliquée à tout type de mobilier notamment les cuisines (Galley en anglais), penderie, cloisons ou tout élément d'avion ayant des parties reliées à la structure de l'avion.

## Revendications

1. Procédé de fabrication d'un panneau sandwich comportant un cœur formé par un matériau alvéolaire (1) présentant des cellules vides, le procédé consistant à déposer sur chacune des surfaces dudit cœur en nid d'abeille une couche d'un matériau pré-imprégné (2, 3) comprenant au moins un pli et à placer l'ensemble dans une presse à compression à chaud, le procédé étant **caractérisé en ce qu'**il comporte en outre :
a) une étape initiale de détermination des trajets d'efforts principaux (10, 11, 12) par optimisation topologique d'un modèle numérique volume élémentaire représentatif de panneau homogène plein soumis à une combinaison de sollicitations nominales, l'étape initale indiquant les zones où de la matière est nécessaire et les zones où elle ne l'est pas ;
b) une étape intermédiaire de dimensionnement par modélisation numérique d'un panneau composite comportant des zones de renforts calculées lors de ladite étape initiale, l'étape intermédiaire supprimant des plis dans les zones faiblement chargées et ajoutant des plis dans les zones chargées tout en conservant la base d'au moins un pli complet sur toute la surface de part et d'autre du cœur en nid d'abeille ;
c) une étape de dépose sur chacune desdites couches de matériau pré imprégné, d'un matériau additionnel (7) positionné sur les trajets d'efforts principaux déterminés lors de l'étape initiale, de manière symétrique par rapport au plan médian dudit panneau.

2. Procédé de fabrication d'un panneau selon la revendication 1 **caractérisé en ce que** ladite combinaison de sollicitations nominales correspond à la combinaison des cas limites de sollicitations.

3. Procédé de fabrication d'un panneau selon la revendication 1 **caractérisé en ce que** ledit matériau additionel est un matériau préimprégné.

4. Procédé de fabrication d'un panneau selon la revendication 1 **caractérisé en ce que** ledit matériau additionnel est un tissu préimpregné.

5. Procédé de fabrication d'un panneau selon la revendication 1 **caractérisé en ce que** ledit matériau préimprégné additionnel est une nappe dont les fibres sont orientées selon les trajets d'effort.

6. Procédé de fabrication d'un panneau selon la revendication 1 **caractérisé en ce que** ledit matériau additionnel est une tôle fine.

7. Procédé de fabrication d'un panneau selon la revendication 1 caractérisé en ce ledit matériau additionnel comprend des fibres de carbone, de verre, ou d'hybride carbone-verre, aramide.

8. Procédé de fabrication d'un panneau selon la revendication 1 **caractérisé en ce qu'**il comporte le dépôt de matériaux additionnels reliant des lignes d'effort.

9. Procédé de fabrication d'un panneau selon la revendication 1 **caractérisé en ce que** ladite étape intermédiaire détermine la largeur des matériaux additionnels ainsi que le nombre de couches de matériau additionnel juste nécessaire.

## Patentansprüche

1. Verfahren zum Herstellen einer Verbundplatte, die einen Kern umfasst, der aus einem Schaummaterial (1) ausgebildet ist, das leere Zellen vorweist, wobei das Verfahren aus einem Abscheiden einer Schicht eines präimprägnierten Materials (2, 3) auf jede Oberfläche des Wabenkerns, das wenigstens eine Lage aufweist, und einem Platzieren der Anordnung in eine Warmpresse besteht, wobei das Verfahren **dadurch gekennzeichnet ist, dass** es ferner Folgendes umfasst:
a) ein erster Schritt eines Bestimmens von Hauptbeanspruchungspfaden (10, 11, 12) durch topologische Optimierung eines numerischen Modells eines Elementarvolumens, das eine massive homogene Platte darstellt, die einer Kombination von Nennbelastungen unterworfen ist, wobei der erste Schritt die Bereiche, in denen das Material benötigt wird, und die Bereiche, in denen dies nicht benötigt wird, anzeigt;
b) einen Zwischenschritt eines Bemessens durch numerische Modellierung einer Verbundplatte, die Verstärkungsbereiche umfasst, die während des ersten Schritts berechnet wurden, wobei der Zwischenschritt Lagen in den leicht belasteten Bereichen auslässt und Lagen in den belasteten Bereichen hinzufügt, während gleichzeitig die Basis von wenigstens einer ganzen Lage über die vollständige Oberfläche auf beiden Seiten des Wabenkerns beibehalten wird;
c) einen Schritt des Abscheidens eines zusätzlichen Materials (7) auf jede der Schichten aus präimprägniertem Material, das auf den während des ersten Schritts bestimmten Hauptbeanspruchungspfaden symmetrisch in Bezug auf die Mittelebene der Platte positioniert wird.

2. Verfahren zum Herstellen einer Platte nach Anspruch 1, **dadurch gekennzeichnet, dass** die Kombination von Nennbelastungen der Kombination von Grenzfällen der Belastungen entspricht.

3. Verfahren zum Herstellen einer Platte nach Anspruch 1, **dadurch gekennzeichnet, dass** das zusätzliche Material ein präimprägniertes Material ist.

4. Verfahren zum Herstellen einer Platte nach Anspruch 1, **dadurch gekennzeichnet, dass** das zusätzliche Material ein präimprägniertes Gewebe ist.

5. Verfahren zum Herstellen einer Platte nach Anspruch 1, **dadurch gekennzeichnet, dass** das zusätzliche präimprägnierte Material eine Decke ist, deren Fasern gemäß den Beanspruchungspfaden ausgerichtet sind.

6. Verfahren zum Herstellen einer Platte nach Anspruch 1, **dadurch gekennzeichnet, dass** das zusätzliche Material ein Feinblech ist.

7. Verfahren zum Herstellen einer Platte nach Anspruch 1, **dadurch gekennzeichnet, dass** das zusätzliche Material Fasern aus Kohlenstoff, Glas oder aus einem Kohlenstoffglashybrid, Aramid, aufweist.

8. Verfahren zum Herstellen einer Platte nach Anspruch 1, **dadurch gekennzeichnet, dass** es die Abscheidung zusätzlicher Materialien umfasst, die Beanspruchungslinien verbinden.

9. Verfahren zum Herstellen einer Platte nach Anspruch 1, **dadurch gekennzeichnet, dass** der Zwischenschritt die Breite der zusätzlichen Materialien sowie die Anzahl der Schichten des genau benötigten zusätzlichen Materials bestimmt.

## Claims

1. Method for producing a sandwich panel comprising a core formed by a cellular material (1) having empty cells, the method consisting in depositing, on each of the surfaces of said honeycomb core, a layer of a prepreg material (2, 3) comprising at least one fold, and placing the assembly in a hot compression press, the method being **characterized in that** it further comprises:
a) an initial step of determining the main force paths (10, 11, 12) by topological optimization of an elementary volume numerical model representative of a solid homogeneous panel subjected to a combination of nominal stresses, the initial step indicating the areas where material is required and the areas where it is not;
b) an intermediate step of sizing, by numerical modeling, a composite panel comprising reinforcement areas calculated during said initial step, the intermediate step removing folds in the lightly loaded areas and adding folds in the loaded areas while maintaining the base of at least one complete fold over the entire surface on either side of the honeycomb core;
c) a step of depositing, on each of said layers of prepreg material, an additional material (7) positioned on the main force paths determined during the initial step, symmetrically with respect to the median plane of said panel.

2. Method for producing a panel according to claim 1, **characterized in that** said combination of nominal stresses corresponds to the combination of the limit cases of stresses.

3. Method for producing a panel according to claim 1, **characterized in that** said additional material is a prepreg material.

4. Method for producing a panel according to claim 1, **characterized in that** said additional material is a prepreg fabric.

5. Method for producing a panel according to claim 1, **characterized in that** said additional prepreg material is a web of which the fibers are oriented along the force paths.

6. Method for producing a panel according to claim 1, **characterized in that** said additional material is a thin metal sheet.

7. Method for producing a panel according to claim 1, **characterized in that** said additional material comprises carbon fibers, glass fibers, or carbon-glass hybrid fibers, or aramid fibers.

8. Method for producing a panel according to claim 1, **characterized in that** it involves the deposition of additional materials which connect force lines.

9. Method for producing a panel according to claim 1, **characterized in that** said intermediate step determines the width of the additional materials as well as the number of layers of additional material just required.
